# EUROPEAN PATENT APPLICATION

(11) **EP 0 976 653 A1**
(43) Date of publication of application: **02.02.2000**
(21) Application number: 99500129.4
(22) Date of filing: 28.07.1999
(51) Int. Cl.: B64D 45/02

(54) **Lightning protection system for composite aircraft structures**

(30) Priority: 29.07.1998 ES 9801611
(71) Applicant: CONSTRUCCIONES AERONAUTICAS, S.A., E-28022 Madrid (ES)
(72) Inventor: Sequeiros Murciano, Felipe, 28005 Madrid (ES); Apestigue Garcia, Roberto, 28027 Madrid (ES)
(74) Representative: Elzaburu, Alberto

(57) **Abstract**

A protection system against electric discharges, especially lightnings, for aircraft structural components, comprising a metal mesh (1) covering the outer face of the entire surface exposed to lightning impacts; a part or washer (2) of insulating material which is placed inside the internal part (I.P.) to be fastened; a metal mesh strip (3) located outside the row of fastening elements (R) whose insertion is made during the same curing process of the structural component, later on drilling and countersinking said component for the installation of the fastening elements (R); and an organic finishing (O.F.) covering the entire structure, including the heads of the fastening elements (R). The invention is applicable to fuel tanks manufactured with composite materials.

## Description

The present invention refers to a system to protect structural components, particularly fuel deposits or tanks manufactured with composite materials, against electric discharges, especially lightnings.

With the introduction of synthetic composite materials, such as those comprising carbon fiber, glass fiber, boron fiber, Kevlar, etc., in the structural and substructural parts of aircraft components, particularly fuel deposits or tanks, replacing metallic materials, normally aluminum, the need of protecting said structural parts against the action of lightnings arises and more specifically against electric discharges in general, and particularly the places where fastening components are applied, for example rivets.

It is known that due to their application fuel tanks used in aircraft are exposed to lightning impacts, the most severe impacts being limited to wing tip areas and stabilizers, etc. These areas are called "zone 1" and should support direct lightning impacts with current peaks of 2 x 10⁵ Amp and with an energy transfer of 2 x 10⁶ Amp² sec. Other areas, also exposed to the action of these impacts, but with discharges of less intensity due to the sweeping of the lightning from zone 1 over the surfaces of the mentioned areas, are called "zone 2".

Until now, the fuel tanks were manufactured with metal (normally aluminum) and accordingly could be located in areas of the zone 2 type, without any arc formation problem in their interior in case of lightning impact, on the one hand due to the fact that being a large conducting metal mass, the lightning energy is absorbed and conducted by the metal and, on the other hand, as the fastening components, particularly the rivets which could be more critical parts, are closely joined to the rest of the structure they behave like a part of it.

However, with the current tendency of using composite materials in aircraft structures and particularly in fuel deposits, problems occur in the locations where metallic fasteners are fitted between the non-metallic parts of these composite materials, passing from the outer surface of the structures to the interior of the deposit. Theoretically, these metallic fasteners have a greater capability of attracting the impact, therefore consdering that they are the parts with the greatest likelihood of receiving lightning impacts.

As a result of an impact, and due to the bad capacity of the composite material to absorb the lightning energy, as well as a result of making high clearance holes to introduce the fastening components and that the application of the fasteners, for example rivets, is carried out under moist conditions in the inner part of the structure (inside the deposit) in which the fastening component which had been exposed to the lightning impact is installed, the expulsion of incandescent particles and electric arcs capable of igniting the fuel stored in the structure consisting of composite material is produced.

Previous attempts to solve this problem are already known. Hence, in the United States Patent No. 3.775.713 assigned to The Boeing Company, to protect the places exposed, a knitted wire mesh is used on the outer surface, a decorated coating being applied over it. However, this protection offers insufficient covering for the heads of the fastening components. Moreover, there is no insulation between the fastening components and the structure, meaning that the structure is of fiber glass and hence, non conducting.

The protection material which is commonly used for metal structures against lightning and electric discharges in general is normally aluminum. This aluminum is normally applied by flame atomization, as a woven mesh, a sheet or a cladding. This previously known method operates satisfactorily when the structure consists of a dielectric material such as glass fiber or Kevlar epoxy resin. Nevertheless, aluminum is galvanically incompatible with a composite material of epoxide and graphite, which is one of the composite materials currently preferred. If this composite material of epoxide and graphite is not isolated, the aluminum will corrode; if it is isolated, the aluminum loses its effectiveness as a protection system (since no electric path is produced).

Another solution for the problem is found in the World Patent WO 84/01487A, also assigned to The Boeing Company, in which a system to protect an epoxide and graphite composite material structure for aviation is developed, having a fastening element inserted into it, said fastening element comprising a head portion which is directed to an external surface portion of said epoxide and graphite composite material structure for aviation, said system for the integral protection against lightning and electric discharges in general consisting of a layer of nickel plated graphite fiber fabric extended throughout said portion of the outer surface of said epoxide and graphite structure, said layer of nickel plated graphite fiber fabric, also being extended over said portion of the head of the fastening element and a dielectric layer arranged between said nickel plated graphite fiber fabric, and said portion head of said fastening element.

This means that a complete protecting layer, consisting of large amounts of different materials, establishing considerable weight is distributed over the entire structure and even the rivet heads. This weight, as is known, is undesirable in aircraft structures.

The applicant Company has developed intense research work to obtain a satisfactory and cheaper system, as well as one which is lighter than those already mentioned, finally having obtained several protection systems included in Spanish patents No. 8800669 and No. 8800670. As a development of the first of the mentioned patents, a system has been obtained which facilitates the application in the production of the structural component, consisting of:
a metal mesh covering the outer face of all the surface exposed to the impact of lightnings (only necessary for structural elements included in zone 1), co-cured with the composite material coating of the structure; and
a part or washer of insulating material fitted inside the internal part to be fastened (specifically the surface where the fastening system nut is supported); and
a metallic mesh strip located outside the row of fastening elements, whose insertion is carried out during the same curing process of the structural element of composite material, later on drilling and countersinking the structural element for the installation of fastening elements.

To make this protection method against lightning impacts applicable to different types of metal fasteners (like, for example, elements with rivetable nuts), it is necessary that the nuts are fitted (by means of their own retaining elements) over an insulating part and this, in turn, over the interior of the inner structural part to be fastened, so as to interrupt the passage of electric current in the case of lightning impact.

The coupling produced with it has been tested in conditions of twice as much as for zone 2 and in conditions of zone 1 with impacts over a fastening element, particularly a rivet, achieving complete success, reducing damage only to the mesh and to an organic finishing layer, located outside, this mesh and this organic finishing layer having been detached in small areas around the screw subject to impact, but arc formation or other damage inside the structure endowed with the mentioned coupling has never been recorded.

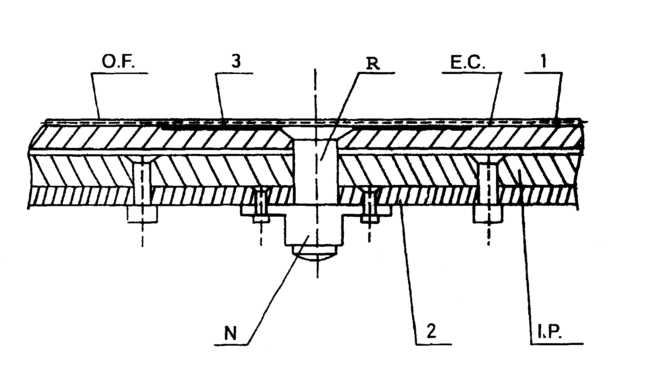

In order to explain the invention, but without limiting it, an example of an embodiment of the present system is described below, with the aid of the drawing representing a detailed sectional view of a zone of a coating structure of a fuel deposit made of a composite material, for example carbon fibre, and where a rivet was located destined to join the structure coating to an internal part that may be of composite material with carbon fiber content, or also may be of metallic material.

In this figure, the external coating (E.C.) is shown with a rivet (R), for example of titanium, crossing it, the rivet also crossing an internal part (I.P.) fastened to said external coating. A nut (N) stabilizes the fastening between the external coating (E.C.) and the internal part (I.P.). To protect this assembly from lightning impacts, first of all a metal mesh layer (1) which covers the outer face exposed to lightning impacts is placed (for protection in zone 1); a metal mesh strip (3) on the outside of the row of rivets (R); and an insulating material part (2) placed inside the internal part (I.P.) to be fastened (specifically on the surface where the nut (N) is supported) to which the nuts (N) will be installed (rivetable in each specific case). The insulating part (2) with the nuts (N) fitted with their own rivets (R) is fastened to the internal part (I.P.) with several rivets. An organic finishing (O.F.) that may consist of a paint and may have a decorative appearance covers the entire external structure, including the heads of the rivets (R).

This example is merely an illustration, being possible to introduce any modification provided they are within the scope of the following claims. These modifications may include the use of different materials, etc.

## Claims

1. A protection system against electric discharges, especially lightnings, for structural components, particularly fuel deposits or tanks manufactured of composite materials, characterized by the combination of two or more of the following components:
a) a metal mesh (1) covering the outer face of all the surface exposed to lightning impacts and which is co-cured with the composite material coating (E.C.) of the structure;
b) a part or washer (2) of insulating material placed inside the internal part (I.P.) to be fastened;
c) a metallic mesh strip (3) located outside the row of fastening elements (R), whose insertion is carried out during the same curing process of the structural element of composite material, later on drilling and countersinking the structural element for the installation of fastening elements (R); and
d) an organic finishing (O.F.) covering the entire structure, including the heads of the fastening elements (R).

2. A system according to claim 1, characterized in that the organic finishing (O.F.) consists of a paint providing a decorative appearance.

3. A system according to claims 1 and 2, characterized in that the insulating material part (2) is fitted in the surface where the nut (N) of each fastening element (R) is supported.

4. A system according to claims 1 to 3, characterized in that the metal mesh (1) may be eliminated in the case of structural elements not included in zone 1 of lightning impacts.
